# EUROPÄISCHE PATENTANMELDUNG

(11) **EP 4 389 616 A1**
(43) Veröffentlichungstag der Anmeldung: **26.06.2024**
(21) Anmeldenummer: 22215468.4
(22) Anmeldetag: 21.12.2022
(51) Int. Cl.: B65B 3/32, B65B 39/00, F16K 15/14, G01F 11/32

(54) **VORRICHTUNG ZUM ABGEBEN EINES FLIESSFÄHIGEN MEDIUMS AN EINEN BEHÄLTER, VERFAHREN ZUM BEFÜLLEN EINES BEHÄLTERS MIT EINEM FLIESSFÄHIGEN MEDIUM SOWIE VERWENDUNG DER VORRICHTUNG UND DES VERFAHRENS ZUM PRÄZISEN DOSIEREN UND SAUBEREN BEFÜLLEN VON BEHÄLTERN**

(71) Anmelder: DAW SE, 64372 Ober-Ramstadt (DE)
(72) Erfinder: GILLMANN, Markus, 64372 Ober-Ramsradt (DE)
(74) Vertreter: Metten, Karl-Heinz

(57) **Zusammenfassung**

Die Erfindung betrifft eine Vorrichtung (1) zum Abgeben eines fließfähigen Mediums, wie eine tropffähige wässrige Beschichtungsmasse, insbesondere Dispersionsbeschichtungsmasse, an einen Behälter, insbesondere einen Eimer, umfassend einen Abgabeausgang (3) für das fließfähige Medium, wenigstens ein am Abgabeausgang (3) angeordnetes, verschließbares Ventil (5) und wenigstens ein dem Abgabeausgang (3) vorgelagertes Dosierventil (7). Ferner betrifft die Erfindung ein Verfahren zum Befüllen eines Gefäßes, insbesondere eines Eimers, mit einem fließfähigen Medium, wobei das Medium diskontinuierlich durch wenigstens ein an einem Abgabeausgang (3) angeordnetes, verschließbares Ventil (5) an das Gefäß abgegeben wird und wobei zum, vorzugsweise gravimetrischen, Dosieren der Abgabemenge ein dem Abgabeausgang (3) vorgelagertes Dosierventil (7) betätigt wird. Schließlich betrifft die Erfindung die Verwendung der erfindungsgemäßen Vorrichtung und des erfindungsgemäßen Verfahrens für das präzise Dosieren und/oder, insbesondere und, das saubere, insbesondere nachtropffreie, Befüllen von Behältern, insbesondere Eimern, mit einem fließfähigen Medium, vorzugsweise einer tropffähigen wässrigen Beschichtungsmasse, insbesondere einer Dispersionsbeschichtungsmasse

## Beschreibung

Die Erfindung betrifft eine Vorrichtung zum Abgeben eines fließfähigen Mediums, wie eine tropffähige wässrige Beschichtungsmasse, insbesondere Dispersionsbeschichtungsmasse, an einen Behälter, insbesondere einen Eimer. Die Erfindung betrifft auch ein Verfahren zum Befüllen eines Behälters, insbesondere eines Eimers, mit einem fließfähigen Medium. Die Vorrichtung und das Verfahren können insbesondere für ein fließfähiges Medium in Form einer tropffähigen wässrigen Beschichtungsmasse, insbesondere einer Dispersionsbeschichtungsmasse, vorgesehen sein. Schließlich betrifft die Erfindung die Verwendung der erfindungsgemäßen Vorrichtung und des erfindungsgemäßen für das präzise Dosieren und das saubere, insbesondere nachtropffreie, Befüllen von Behältern mit einem fließfähigen Medium, vorzugsweise einer tropffähigen wässrigen Beschichtungsmasse, insbesondere einer Dispersionsbeschichtungsmasse.

Zum Befüllen von Behältern mit einem fließfähigen Medium sind sogenannte Kolbendosierer bekannt. Bei einem bekannten Kolbendosierer wird das Füllmedium durch ein Rohr gefördert, dessen Ende wie ein auf dem Kopf stehendes U geformt ist. Das Abgabe-Ende ist oberhalb einer Befüllposition für einen Behälter angeordnet ist. Am Abgabe-Ende kann ein Klappenventil angeordnet sein, das zum Schließen oder Öffnen durch einen Kolbenaktor betätigt wird. Das Klappenventil schließt nicht verlässlich, sodass Variationen bei der Befüllmenge auftreten und der Behälter außenseitig beschmutzt werden kann.

Es ist daher eine Aufgabe der Erfindung, die Nachteile des Stands der Technik zu überwinden und insbesondere eine Vorrichtung und ein Verfahren zum schnellen, präzise dosierten und/oder, insbesondere und, sauberen Befüllen von Behältern, insbesondere Eimern, mit einem fließfähigen Medium, vorzugsweise einer tropffähigen wässrigen Beschichtungsmasse, insbesondere einer Dispersionsbeschichtungsmasse, bereitzustellen. Diese Aufgabe wird gelöst durch den Gegenstand der unabhängigen Ansprüche.

Demnach ist eine Vorrichtung zum Abgeben eines fließfähigen Mediums an einen Behälter, insbesondere einen Eimer, vorgesehen. Vorzugsweise ist die Vorrichtung ausgelegt und eingerichtet zum Abgeben einer tropffähigen wässrigen Beschichtungsmasse, insbesondere einer Dispersionsbeschichtungsmasse. Besonders bevorzugt kann die Vorrichtung zum Abgeben der in WO 2016/128033 A1 beschriebenen tropffähigen wässrigen Beschichtungsmasse, insbesondere Dispersionsbeschichtungsmasse, ausgelegt und eingerichtet sein. Die Vorrichtung zum Abgeben eines fließfähigen Mediums (Abgabevorrichtung) umfasst einen Abgabeausgang für das fließfähige Medium, wenigstens ein am Abgabeausgang angeordnetes, verschließbares Ventil (Abgabeventil) und wenigstens ein dem Abgabeausgang vorgelagertes Dosierventil. Das wenigstens eine verschließbare Ventil hat einen geöffneten Abgabezustand, in dem es die Abgabe von fließfähigem Medium aus der Vorrichtung gestattet, und einen verschlossenen Zustand oder Schließzustand, in dem es eine Abgabe des fließfähigen Mediums aus der Vorrichtung, vorzugsweise vollständig, verhindert. Das Dosierventil ist dazu ausgelegt und eingerichtet, die Menge abzugebenden Mediums zu bestimmen. Insbesondere kann das Dosierventil dazu auslegt und eingerichtet sein, einen insbesondere kontinuierlichen Strom des fließfähigen Mediums aus Richtung einer Quelle, wie einer Pumpe und/oder einem Mischbehälter, zu dem wenigstens einen am Abgabeausgang angeordneten verschließbaren Ventil zuzulassen oder zu unterbinden. Die Quelle kann dazu ausgelegt und eingerichtet sein, das fließfähige Medium mit einem, insbesondere statischen, Förderdruck im Bereich von 1,1 bar bis 5 bar, insbesondere 1,2 bar bis 2,5 bar, vorzugsweise im Bereich 1,3 bar bis 1,5 bar, zu beaufschlagen. Alternativ oder zusätzlich kann die Quelle dazu ausgelegt und eingerichtet sein, das fließfähige Medium an einem Eingang der Abgabevorrichtung mit einer Fließgeschwindigkeit im Bereich von 0,1 m/s bis 1 m/s, insbesondere zwischen 0,2 m/s und 0,5 m/s, bevorzugt mit etwa 0,3 m/s zu fördern. Der Eingang der Abgabevorrichtung kann beispielsweise eine Größe zwischen DN 50 und DN 150, vorzugsweise von DN 100, aufweisen. Durch den Einsatz eines Dosierventils zum Einstellen einer vorbestimmten Abgabemenge in Kombination mit wenigstens einem verschließbaren Ventil (Abgabeventil), das sich von dem Dosierventil unterscheidet, können Behälter durch die Abgabevorrichtung in rascher Folge, insbesondere auch vermittels eines vollautomatisierten Prozesses, mit präzise bemessenen Abgabemengen an fließfähigem Medium beschickt werden. Das dem Dosierventil in Fließrichtung des abzugebenden Mediums nachgelagerte wenigstens eine verschließbare verschließbaren Ventil (Abgabeventil) am Abgabeausgang der Abgabevorrichtung erlaubt eine besonders saubere Ausgabe, insbesondere ohne Nachtropfen.

Gemäß einer bevorzugten Ausführungsform ist das verschließbare Ventil selbsttätig, insbesondere dazu ausgelegt und eingerichtet, frei von einer Antriebseinheit von einem geöffneten Abgabezustand in einen verschlossenen Zustand zu wechseln. Vorzugsweise ist das wenigstens eine verschließbare Ventil frei von einer elektromechanischen Antriebseinheit.

Bei einer Ausführungsform der Abgabevorrichtung ist das wenigstens eine verschließbare Ventil als Rückschlagventil realisiert, insbesondere mit Federrückstellung. Vorzugsweise ist das wenigstens eine verschließbare Ventil mit einem Vorspannmittel versehen, das das wenigstens eine verschließbare Ventil in seine verschlossenen Zustand drängt. Das Vorspannmittel kann in Bauteileinheit mit dem verschließbaren Ventil realisiert sein. Vorzugsweise weist das verschließbare Ventil materialimmanente federelastische Rückstellkräfte auf. Insbesondere besteht aus oder umfasst das verschließbare Ventil wenigstens ein oder genau ein federelastisches Material ausgewählt aus der Gruppe bestehend aus Silikonen und thermoplastischen Elastomeren. Besonders bevorzugt ist das verschließbare Ventil bzw. Rückschlagventil als Entenschnabelventil realisiert. Das Entenschnabelventil kann beispielsweise eine linienförmige, zwei V-förmige oder drei oder mehr sternförmige Schlitzöffnungen haben. Das Entenschnabelventil weist vorzugsweise genau eine, insbesondere diagonale, Schlitzöffnung auf. Optional umfasst das Entenschnabelventil wenigstens einen Verstärkungssteg, der sich vorzugsweise quer, insbesondere senkrecht zu der Schlitzöffnung erstreckt. Der wenigstens eine Verstärkungssteg kann insbesondere auf der Innenseite des Entenschnabelventils angeordnet sein.

Die Abgabevorrichtung umfasst gemäß einer Ausführungsform mehrere, insbesondere wenigstens zwei, vorzugsweise wenigstens fünf, besonders bevorzugt wenigstens zehn, und/oder (bevorzugt und) nicht mehr als 100, vorzugsweise nicht mehr als 50, besonders bevorzugt nicht mehr als 25, verschließbare Ventile, die am Abgabeausgang angeordnet sind. Gemäß einer besonders bevorzugten Ausführung kann die Abgabevorrichtung mit 12 bis 18, insbesondere mit genau 16, verschließbaren Ventilen ausgestattet sein, die am Abgabeausgang angeordnet sind. Vorzugsweise sind die mehreren, insbesondere alle, verschließbaren Ventile baugleich. Die mehreren verschließbaren Ventile der Abgabevorrichtung sind vorzugsweise parallel zu einander an der Abgabeöffnung der Abgabevorrichtung angeordnet. Die Abgabevorrichtung ist dazu ausgelegt und eingerichtet, das fließfähige Medium durch die mehreren verschließbaren Ventile, insbesondere an einen einzigen Behälter, abzugeben.

Bei einer Abgabevorrichtung mit mehreren verschließbaren Ventilen sind die mehreren verschließbaren Ventile vorzugsweise derart aufeinander abgestimmt, dass sie im Wesentlichen gleichzeitig Öffnen oder gleichzeitig Schließen. Insbesondere umfassen die mehreren verschließbaren Ventile gleichartige Vorspannmittel und/oder es wirkt auf die mehreren verschließbaren Ventile die gleiche Schließkraft.

Gemäß einer bevorzugten Ausführung umfasst die Vorrichtung zum Abgeben des fließfähigen Mediums ferner eine Aufnahmeplatte, wobei das wenigstens eine verschließbare Ventil in der, insbesondere tellerförmigen, Aufnahmeplatte gehalten ist. Die Aufnahmeplatte umfasst vorzugsweise eine zur Anzahl der verschließbaren Ventile entsprechende Anzahl Ventilaufnahmen. Die Aufnahmeplatte umfasst vorzugsweise eine auf den zu befüllenden Behälter zu richtende Außenseite und eine zur Außenseite gegenüberliegende Innenseite. An der Innenseite der Aufnahmeplatte kann wenigstens eine Positionierhilfe für das wenigstens eine verschließbare Ventil vorgesehen sein. Die Aufnahmeplatte ist vorzugsweise dazu ausgelegt und eingerichtet, mit dem wenigstens einen verschließbaren Ventil innenseitig belegbar zu sein. Das wenigstens eine verschließbare Ventil oder die mehreren verschließbaren Ventile umfassen vorzugsweise einen, vorzugsweise tellerförmigen und/oder gemeinsamen, Haltekragen, zum Abstützen an der Innenseite der Aufnahmeplatte. Zusätzlich oder alternativ kann die Aufnahmeplatte mit einer Spannplatte zum Fixieren des wenigstens einen Ventils ausgestattet sein. Die Spannplatte umfasst vorzugsweise auf die Ventilaufnahmen der Aufnahmeplatte abgestimmte Durchgangsöffnungen. Vorzugsweise ist die Form, Größe, Anzahl und/oder Anordnung der Durchgangsöffnung(en) entsprechend der Ventilaufnahme(n) gewählt.

Gemäß einer Ausführungsform umfasst die Vorrichtung zum Abgeben eines fließfähigen Mediums ferner ein Abgaberohr und eine Befestigungsvorrichtung, die zum lösbaren Befestigen der Aufnahmeplatte am Abgaberohr ausgelegt und eingerichtet ist. Insbesondere weist die Befestigungsvorrichtung wenigstens einen Hakenvorsprung, vorzugsweise zwei diametral gegenüberliegende Hakenvorsprünge, zum Ergreifen der Aufnahmeplatte auf. Bevorzugt weist die Befestigungsvorrichtung eine schwenkbar am Abgaberohr gelagerte Ausgleichswippe auf, die den wenigstens einen Hakenvorsprung trägt. Mittels einer Ausgleichswippe kann auf einfache Weise ein gleichmäßiger Flächenkontakt zwischen dem Abgaberohr und der Aufnahmeplatte eingestellt werden, um die Aufnahmeplatte, vorzugsweise unter Verwendung eines Dichtmittels als Zwischenlage, an dem Abgaberohr festlegen. Alternativ oder zusätzlich umfasst die Befestigungsvorrichtung wenigstens einen Exzenterhebel zum Andrücken der Aufnahmeplatte an das Abgaberohr. Mittels eines Exzenterhebels kann mit relativ wenig Körperkraft eine besonders hohe Haltekraft für die Aufnahmeplatte bereitgestellt werden.

Bei einer bevorzugten Ausführungsform einer Vorrichtung zum Abgeben eines fließfähigen Mediums umfasst das Dosierventil einen beweglichen Ventilkolben und einen Ventilsitz. Insbesondere umfasst der Ventilkolben einen Dichtkörper, wie eine Formdichtung, oder besteht daraus. Alternativ oder zusätzlich umfasst der Ventilsitz einen Dichtkörper oder besteht daraus. Der Ventilkolben ist vorzugsweise translationsbeweglich, insbesondere translationsbeweglich in Richtung der durch die verschließbaren Ventile und/oder Ventilaufnahmen definierten Abgaberichtung. Der Ventilkolben kann an einer Stellstange getragen sein, die vorzugsweise translationsbeweglich ist. Es kann bevorzugt sein, dass der Ventilkolben in eine Schließstellung verbringbar ist, in der der Strom des fließfähigen Mediums aus Richtung einer Quelle zu dem wenigstens einen verschließbaren Ventil unterbrochen ist. Der Ventilkolben kann in wenigstens einer Öffnungsstellung positionierbar sein, um einen Strom des fließfähigen Mediums von der Quelle zum Abgabeausgang gestatten. Insbesondere kann der Ventilkolben in mehreren verschiedenen Öffnungsstellungen positionierbar sein, um den Strom des fließfähigen Mediums von der Quelle zum Abgabeausgang einzustellen.

Gemäß einer anderen bevorzugten Ausführungsform einer Vorrichtung zum Abgeben eines fließfähigen Mediums, die mit den vorigen kombinierbar ist, begrenzen das wenigstens eine verschließbare Ventil (oder die mehreren verschließbaren Ventile) und das Dosierventil eine Schleusenkammer. Die Vorrichtung umfasst ferner wenigstens ein Druckreduktionsmittel, das zum Verringern des Drucks in der Schleusenkammer ausgelegt und eingerichtet ist. Vorzugsweise ist die Schleusenkammer einerseits durch das eine verschließbare Ventil oder die mehreren Ventile abschließbar und andererseits durch das Dosierventil. Die Vorrichtung kann insbesondere mittels einer Schleusenkammer zum diskontinuierlichen und/oder intermittierenden Abgeben des fließfähigen Mediums ausgelegt und eingerichtet sein.

Insbesondere weist das Druckreduktionsmittel eine die Schleusenkammer abschnittsweise begrenzende, insbesondere ring- oder scheibenförmige, Membran auf. Vorzugsweise ist die Membran federvorgespannt. Optional umfasst die Vorrichtung ferner wenigstens einen Pneumatik- oder Hydraulikaktor, der, insbesondere über wenigstens einen Steuerkanal, insbesondere eine Druckgrobdosierung und/oder eine Druckfeindosierung, in fluidischer Verbindung mit einer Pneumatik- oder Hydraulikkammer steht, um die Pneumatik- oder Hydraulikkammer mit einem Steuerdruck zu beaufschlagen, wobei die Membran die Schleusenkammer von der Pneumatik- oder Hydraulikkammer separiert. Der Steuerdruck kann in einer bevorzugten Ausführungsform im Bereich von 1,5 bar bis 10 bar, vorzugsweise im Bereich von 2 bar bis 5 bar, besonders bevorzugt bei etwa 3 bar liegen.

Das Druckreduktionsmittel ist insbesondere in dem Dosierventil angeordnet. Vorzugsweise ist die Membran, insbesondere koaxial, an dem Ventilkolben angeordnet und/oder die Pneumatik- oder Hydraulikkammer in dem Ventilkolben untergebracht. Vorzugsweise ist eine Rückstellfeder zum Beaufschlagen der Membran an oder in dem Ventilkolben angeordnet. An oder in der Stellstange kann ein Steuerkanal des Druckreduktionsmittels angeordnet sein, der die Pneumatik- oder Hydraulikkammer fluidisch mit der Druckgrobdosierung, der Druckfeindosierung und/oder dem Pneumatik- oder Hydraulikstellaktor verbindet. Indem das Druckreduktionsmittel in dem Dosiermittel angeordnet ist, kann eine besonders raumsparende Vorrichtung realisiert werden. Vorzugsweise sind Druckreduktionsmittel und Dosierventil aufeinander abgestimmt, um eine besonders präzise dosierte und saubere Abgabe zu gewährleisten.

Die Erfindung betrifft auch ein Verfahren zum Befüllen eines Behälters, insbesondere eines Eimers, mit einem fließfähigen Medium, wie einer tropffähigen wässrigen Beschichtungsmasse, insbesondere einer Dispersionsbeschichtungsmasse, insbesondere durch Einsatz der erfindungsgemäßen Vorrichtung, wie vorangehend für allgemeine und bevorzugte Ausführungsformen beschrieben. Vorzugsweise wird das Verfahren bzw. die Vorrichtung zum Abfüllen von wässrigen bis hin zu leicht pastösen Produkten verwendet. Besonders bevorzugt ist das Verfahren zum Abgeben der in WO 2016/128033 A1 beschriebenen tropffähigen wässrigen Beschichtungsmasse, insbesondere Dispersionsbeschichtungsmasse, insbesondere an einen Behälter, wie einen Eimer, ausgelegt und eingerichtet. Alternativ kann das Verfahren bzw. die oben beschriebene Vorrichtung ausgelegt und eingerichtet sein zum Abgeben von Farbe, Kleber, Lebensmittel, wie Ketchup, oder dergleichen. Bei dem erfindungsgemäßen Verfahren wird das Medium diskontinuierlich durch wenigstens ein an einem Abgabeausgang angeordnetes, verschließbares Ventil an den Behälter abgegeben. Zum, vorzugsweise gravimetrischen und/oder volumetrischen, Dosieren der Abgabemenge wird ein dem Abgabeausgang vorgelagertes Dosierventil betätigt. Das erfindungsgemäße Verfahren kann kurz als Befüllverfahren bezeichnet sein.

Vorzugsweise kann zur Durchführung des erfindungsgemäßen Verfahrens die oben beschriebene erfindungsgemäße Vorrichtung verwendet werden. Die oben genannte erfindungsgemäße Vorrichtung ist vorzugsweise zur Durchführung des erfindungsgemäßen Verfahrens ausgelegt und eingerichtet.

Vorzugsweise ist das Verfahren ausgelegt und eingerichtet zum Befüllen eines Behälters, insbesondere eines Eimers, vorzugsweise mit einem ein Fassungsvermögen von 1 L bis 50 L, insbesondere von 2 L bis 25 L, vorzugweise von 5 L bis15 L. Der Behälter ist vorzugsweise aus einem Kunststoffmaterial, insbesondere einem Thermoplast, wie HDPE, gebildet. Es kann zweckmäßig sein, dass der Behälter eine Öffnung, insbesondere genau eine Öffnung, aufweist. Es sei klar, dass die Öffnung des Behälters durch einen Deckel oder dergleichen, insbesondere luft- und/oder flüssigkeitsdicht, verschließbar sein kann. Es kann bevorzugt sein, dass der Behälter, wie der Eimer, mit einem Volumenstrom von wenigstens 1 L/s, insbesondere wenigstens 2 L/s, vorzugsweise wenigstens 3 L/s, und/oder, bevorzugt und, nicht mehr als 10 L/s, insbesondere nicht mehr als 5 L/s, vorzugsweise nicht mehr als 2,5 L/s, befüllt wird. Insbesondere kann eine Befüllung in weniger als 20 Sekunden, vorzugsweise in weniger als 10 Sekunden, besonders bevorzugt in weniger als 7 Sekunden oder weniger als 5 Sekunden durchgeführt werden. Während einer Befüllung kann eine Füllmenge von 10 L bis 15 L, insbesondere 12,5 L, in einer Taktzeit im Bereich von 2 Sekunden bis 10 Sekunden, insbesondere 3 Sekunden bis 7 Sekunden, vorzugsweise etwa 5 Sekunden, eingefüllt werden.

Gemäß einer bevorzugten Ausführungsform des Verfahrens zum Befüllen eines Behälters schließt das wenigstens eine verschließbare Ventil sich selbsttätig. Zusätzlich oder alternativ wird das wenigstens eine verschließbare Ventil bei einer Ausführungsform des Verfahren, vorzugsweise ausschließlich, durch eine Federrückstellkraft in seinen verschlossenen Zustand gedrängt.

Insbesondere kann vorgesehen sein, dass das Abgeben des Mediums bei einer Ausführungsform eines erfindungsgemäßen Verfahrens zum Befüllen eines Behälters simultan durch mehrere am Abgabeausgang angeordnete verschließbare Ventile erfolgt. Bei dem Befüllverfahren kann das Abgeben des Mediums simultan durch wenigstens zwei, vorzugsweise wenigstens fünf, besonders bevorzugt wenigstens zehn, und/oder (bevorzugt und) nicht mehr als 100, vorzugsweise nicht mehr als 50, besonders bevorzugt nicht mehr als 25, verschließbare Ventile, die am Abgabeausgang angeordnet sind, erfolgen. Gemäß einer besonders bevorzugten Ausführungsform wird die Abgabe simultan mit 12 bis 18, insbesondere mit genau 16, verschließbaren Ventilen, durchgeführt.

Vorzugsweise wird bei dem Befüllverfahren das wenigstens eine verschließbare Ventil von einer Aufnahmeplatte getragen. Dabei kann die Aufnahmeplatte, insbesondere mittels eines Exzenterhebels, und/oder (bevorzugt und) mit einer schwenkbar gelagerten Ausgleichswippe, an einem Abgaberohr befestigt werden.

Optional kann vorgesehen sein, dass die Aufnahmeplatte nach mehreren, insbesondere wenigstens 10, vorzugsweise wenigstens 1000, besonders bevorzugt wenigstens 1000, Abgabevorgängen gelöst, insbesondere entfernt, wird und das wenigstens eine verschließbare Ventil von der gelösten Aufnahmeplatte entnommen und erneuert, insbesondere ausgetauscht und/oder gereinigt, wird.

Es kann bevorzugt sein, dass bei dem Verfahren eine Schleusenkammer von dem wenigstens einen verschließbaren Ventil und dem Dosierventil begrenzt wird. Insbesondere wird die Schleusenkammer zum Beenden eines Abgabevorgangs vom Dosierventil verschlossen. Vorzugsweise wird das Dosierventil zum Verschließen der Schleusenkammer von einer Öffnungsstellung in eine Schließstellung bewegt, in der das Dosierventil in Eingriff mit einem Ventilsitz gelangt, wobei das Dosierventil von der Öffnungsstellung zunächst, insbesondere mit einer, vorzugsweise niedrigen, ersten Geschwindigkeit, in eine geöffnete Zwischenstellung und anschließend mit einer, vorzugsweise höheren, zweiten Geschwindigkeit, wobei insbesondere die zweite Geschwindigkeit höher ist als die erste Geschwindigkeit, in die Schließstellung bewegt wird. Durch das Anfahren der Zwischenstellung mit einer ersten, insbesondere niedrigen, Geschwindigkeit können unerwünschte stoßartige Förderungen des Mediums vermieden werden. Das Verfahren von der Zwischenstellung in die Schließstellung mit der von der ersten Geschwindigkeit unterschiedlichen zweiten, vorzugsweise erhöhten, Geschwindigkeit kann für eine präzise Dosierung und/oder ein verlässliches Verschließen der Schleusenkammer durch das Dosierventil zweckdienlich sein. In der Zwischenstellung kann das Dosierventil kurzzeitig anhalten. Alternativ kann das Dosierventil die Zwischenstellung im Zuge einer kontinuierlichen Bewegung unter Veränderung der Schließgeschwindigkeit durchfahren. Eine diskontinuierliche, beispielsweise stoßweise, Abgabe von fließfähigem Medium lässt sich unter Verwendung einer Schleusenkammer besonders einfach implementieren.

Gemäß einer bevorzugten Weiterbildung wird zum Beenden eines Abgabevorgangs der Druck in der Schleusenkammer reduziert. Der Druck in der Schleusenkammer kann um wenigstens 0,05 bar, insbesondere wenigstens 0,1 bar, vorzugweise wenigstens 0,2 bar, besonders bevorzugt um wenigstens 0,4 bar, reduziert werden. Vorzugsweise wird der Druck in der Schleusenkammer um nicht mehr als 2 bar, insbesondere nicht mehr als 1 bar, vorzugsweise nicht mehr als 0,5 bar, besonders bevorzugt nicht mehr als 0,2 bar reduziert. Insbesondere wird zum Reduzieren des Drucks in der Schleusenkammer eine die Schleusenkammer abschnittsweise begrenzende Membran betätigt. Vorzugsweise wird die Membran mit einer Rückstell-Federkraft beaufschlagt. Besonders bevorzugt wird die Membran mit einem Pneumatik- oder Hydraulikfluid beaufschlagt. Zum Betätigen der Membran mit einem Pneumatik- oder Hydraulikfluid wird vorzugsweise eine von der Schleusenkammer durch die Membran getrennte Pneumatik- oder Hydraulikkammer mit einem Stelldruck beaufschlagt.

Vorzugsweise kann die Membran derart betätigt werden, dass sie während des Schließens der Schleusenkammer durch das Dosierventil einen expandierten Zustand hat. Die Membran kann in dem expandierten Zustand, vorzugsweise konvex, in die Schleusenkammer hineinragen. Der expandierte Zustand der Membran kann beispielsweise durch Anlegen eines Steuerdrucks bewirkt werden. Nach erfolgtem Verschließen der Schleusenkammer durch das Dosierventil kann die Membran aus dem expandierten Zustand in einen kontrahierten Zustand überführt werden. Die Membran kann durch Entfernen des Steuerdrucks und/oder, bevorzugt und, eine Federrückstellung in den kontrahierten Zustand gebracht werden. In dem kontrahierten Zustand der Membran bildet sie eine, insbesondere konkave, Ausbuchtung der Schleusenkammer. Der Innenraum der Schleusenkammer ist im expandierten Zustand der Membran kleiner als im kontrahierten Zustand der Membran. Wenn die Membran in der durch das Dosierventil geschlossenen Schleusenkammer von ihrem expandierten in ihren kontrahierten Zustand verbracht wird, senkt das den Druck des fließfähigen Mediums in der Schleusenkammer. Das fließfähige Medium in der Schleusenkammer wird dadurch an einem Weiterfluss zum Behälter gehindert. Das verschließbare Ventil wird durch den abgesenkten Druck, der als Vakuum bezeichnet sein kann, in seinen verschlossenen Zustand gedrängt und/oder im verschlossenen Zustand gehalten.

Bei einer Ausführungsform des erfindungsgemäßen Verfahrens wird das Medium, insbesondere kontinuierlich, mit einem, vorzugweise konstanten, Versorgungsdruck an die Schleusen- oder Dosierkammer bereitgestellt. Das Medium kann von einer Quelle, wie einer Pumpe und/oder einem Mischbehälter, mit dem Versorgungsdruck bereitgestellt werden. Das fließfähige Medium kann von einer Quelle oder dergleichen mit einem, insbesondere statischen, Versorgungsdruck oder Förderdruck im Bereich von 1,1 bar bis 5 bar, insbesondere 1,2 bar bis 2,5 bar, vorzugsweise im Bereich 1,3 bar bis 1,5 bar, beaufschlagt werden. Alternativ oder zusätzlich kann das fließfähige Medium bei geöffnetem Dosierventil an einem Eingang der Abgabevorrichtung mit einer Fließgeschwindigkeit im Bereich von 0,1 m/s bis 1 m/s, insbesondere zwischen 0,2 m/s und 0,5 m/s, bevorzugt mit etwa 0,3 m/s, fließen. Das Dosierventil kann geschlossen werden, um den Durchfluss des Mediums zur Abgabeöffnung, insbesondere durch die Schleusenkammer, zu unterbrechen. Das Dosierventil kann geöffnet werden, um den Durchfluss von Medium zur Abgabeöffnung, insbesondere via der Schleusenkammer, zuzulassen.

Vorteilhafte Weiterbildungen sind in den abhängigen Ansprüchen angegeben. Weitere Eigenschaften, Merkmale und Vorteile der Erfindung werden durch die folgende Beschreibung einer bevorzugten Ausführungsform der Erfindung anhand der beiliegenden Zeichnung deutlich, in denen zeigen:
- Figur 1: eine perspektivische Darstellung einer Vorrichtung zum Abgeben eines fließfähigen Mediums; und
- Figur 2: eine andere perspektivische Darstellung der Vorrichtung gemäß Figur 1;
- Figur 3: eine Schnittansicht der Vorrichtung gemäß Figur 1;
- Figur 4: eine perspektivische Schnittansicht der Vorrichtung gemäß Figur 1;
- Figur 5A-5D: schematische Darstellungen des Dosierventils während eines Öffnungsvorgangs;
- Figur 6A-6D: schematische Darstellungen des Dosierventils während eines Schließvorgangs; und
- Figur 7: eine schematische Darstellung eines Entenschnabelventils.

In der nachfolgenden Beschreibung bevorzugter Ausführungsformen der Erfindung anhand der beiliegenden Figuren werden für dieselben oder ähnliche Komponenten zur Vereinfachung der Lesbarkeit dieselben oder ähnliche Bezugszeichen verwendet.

Relative Angaben (wie schnell/langsam, hoch/niedrig, groß/klein) sind Rahmen der vorliegenden Offenbarung gewählt, um gleichartige Einheiten verschiedener Größe in Relation zu einander zu Beschreiben. Es sei klar, dass eine erste (schnelle/hohe/große) Einheit in Relation zu der jeweils zugeordneten zweiten (langsamen/niedrigen/kleinen) Einheit quantitativ unterschiedlich ist.

Bei der nachfolgenden Beschreibung bevorzugter Ausführungsformen der Erfindung anhand der beiliegenden Figuren wird eine erfindungsgemäße Vorrichtung zum Abgeben eines fließfähigen Mediums an einen Behälter (kurz: Abgabevorrichtung) im Allgemeinen mit dem Bezugszeichen 1 gekennzeichnet. Als wesentliche Bestandteile umfasst die Abgabevorrichtung 1 wenigstens ein an ihrem Abgabeausgang 3 angeordnetes und verschließbares Ventil 5 sowie wenigstens ein dem Abgabeausgang 3 vorgelagertes Dosierventil 7.

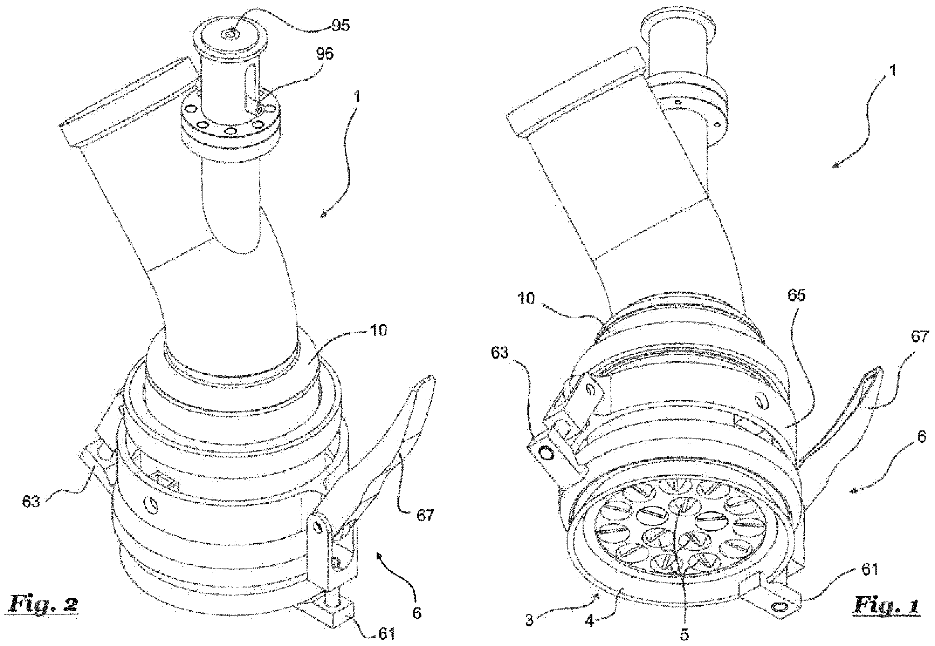

Die Figuren 1-4 zeigen verschiedene Ansichten einer Abgabevorrichtung 1. Die in Figur 1 exemplarisch dargestellte Abgabevorrichtung 1 ist mit 16 baugleichen verschließbaren Ventilen 5 ausgestattet. Die verschließbaren Ventile 5 der Abgabevorrichtung 1 werden von einer Aufnahmeplatte 4 getragen, die den Abgabeausgang 3 bedeckt. An der Aufnahmeplatte 4 sind die verschließbaren Ventile 5 in zwei konzentrischen Kreisen angeordnet. Der innere Kreis setzt sich aus fünf gleichmäßig beabstandeten verschließbaren Ventilen 5 zusammen. Der äußere Kreis umgibt den inneren Kreis konzentrisch. Im äußeren Kreis sind elf gleichmäßig voneinander beabstandete, verschließbare Ventile 5 enthalten. Die verschließbaren Ventile 5 sind in Umfangsrichtung relativ zueinander versetzt angeordnet.

Die Aufnahmeplatte 4 ist tellerförmig und bedeckt den Abgabeausgang 3 eines Abgaberohrs 10 der Abgabevorrichtung 1. Eine Befestigungsvorrichtung 6 hält die Aufnahmeplatte 4 lösbar an dem Abgaberohr 10. Die Befestigungsvorrichtung 6 ist vorzugsweise manuell und/oder werkzeugfrei bedienbar. Bei dem vorliegenden Beispiel umfasst die Befestigungsvorrichtung 6 einen Exzenterhebel 67 zum Andrücken der Aufnahmeplatte 4 an das Abgaberohr 10. Die Befestigungsvorrichtung 6 umfasst ferner zwei Hakenvorsprünge 61 und 63, welche die Aufnahmeplatte 4 an diametral gegenüberliegenden Randkantenabschnitten ergreifen kann, um sie an dem Abgaberohr 10 zu halten.

Die Hakenvorsprünge 61 und 63 sind schwenkbar zwischen einer Haltestellung, in der sie im Bereich des Abgabeausgang 3 die Aufnahmeplatte 4 ergreifen, und einer vom Abgabeausgang 3 in Querrichtung beabstandeten Freigabestellung. Wenn wenigstens einer der Hakenvorsprünge 61, 63 in der Freigabestellung ist, kann die Aufnahmeplatte 4 von dem Abgabeausgang 3 entfernt werden, vorzugsweise weggeschwenkt werden. Wenn die Aufnahmeplatte 4 von dem Abgabeausgang 3 entfernt ist, können die verschließbaren Ventile 5 aus ihren Aufnahmen 14 in der Aufnahmeplatte 4 entnommen werden, um sie zu reinigen und/oder um beschädigte Ventile 5 zu entfernen.

Um eine gleichmäßige und starke Anpresskraft zum Fixieren der Aufnahmeplatte 4 am Abgabeausgang 3 des Abgaberohrs 10 bereitzustellen, kann, wie bei dem dargestellten Beispiel, eine Ausgleichswippe 65 vorgesehen sein. Die Ausgleichswippe 65 verbindet die gegenüberliegenden Hakenvorsprünge 61, 63 miteinander. Der erste Hakenvorsprung 61 ist schwenkbar mit dem Exzenterhebel 67 verbunden. Der Exzenterhebel 67 stützt sich schwenkbar an einer in Querrichtung hervorstehenden ersten Nase der hier ringförmigen Ausgleichswippe 65 ab. In der Querrichtung gegenüberliegend zu der ersten Nase umfasst die Ausgleichswippe eine zweite Nase, an der der zweite Hakenvorsprung 63 schwenkbar gelagert ist. Die Ausgleichswippe 65 ist in Querrichtung mittig zwischen den gegenüberliegenden Hakenvorsprünge 61, 63 schwenkbar an dem Abgaberohr 10 festgelegt. Alternativ wäre es denkbar, eine andersartige Befestigungsvorrichtung 6, beispielsweise ohne Ausgleichswippe und stattdessen mit je einem Exzenterhebel pro Hakenvorsprung vorzusehen. Bei der hier beschriebenen bevorzugten Ausführungsform ergibt sich durch die Verwendung der Ausgleichswippe 65 als Vorteil, dass mit nur einem einzigen Exzenterhebel 67 eine gleichmäßige Anpresskraft über die mehreren Hakenvorsprünge 61, 63 zum Befestigen der Aufnahmeplatte 4 am Abgabeausgang 3 bewirkt werden kann. Die Verwendung nur eines einzigen Exzenterhebel 67 vereinfacht außerdem die Montage und Wartung der Abgabevorrichtung 1.

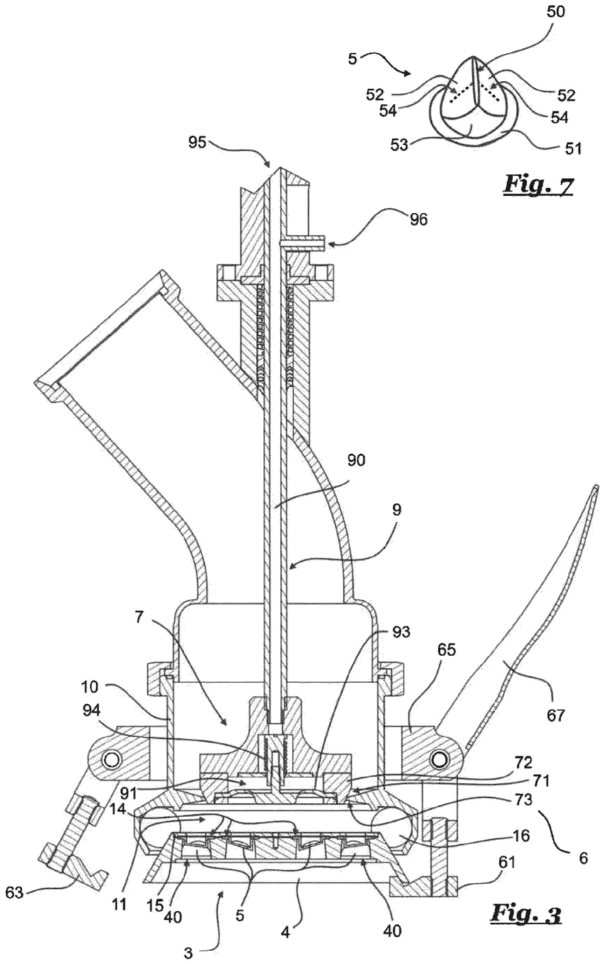

Figur 3 zeigt eine Schnittansicht durch die Abgabevorrichtung 1. In der Schnittansicht ist zuerst erkennen, dass am Abgabeausgang 3 ein Dichtmittel 16 angeordnet ist, mit dem die Aufnahmeplatte 4 durch die Befestigungsvorrichtung 6 in Eingriff gebracht wird. Die Aufnahmeplatte 4 ist mit zahlreichen Ventilaufnahmen 14 ausgestattet, in denen je eines der Ventile 5 sitzt. Die Aufnahmeplatte 4 ist durchdrungen von Abgabekanälen 40 für das fließfähige Medium, welches mit der erfindungsgemäßen Abgabevorrichtung 1 abzugeben ist. Jedem Abgabekanal 40 ist ein verschließbares Ventil 5 zugeordnet. Die Abgabekanäle vergrö-ßern sich in der in Abgaberichtung.

An der Innenseite der Aufnahmeplatte 4 bilden die Ventilaufnahmen 14 stufenartige und ringförmige Schultern 41. Auf einer in Abgaberichtung zurückgesetzten Stufe der ringförmigen Schultern 41 sitzen ringförmige Kragenabschnitte 51 der verschließbaren Ventile 5. Die ringförmigen Kragenabschnitte 51 der verschließbaren Ventile sind zwischen der Aufnahmeplatte 4 und einer Spannplatte 15 gehalten. Die Spannplatte 15 enthält zahlreiche Durchdringungsöffnungen, die komplementär zu den Abgabekanälen 40 der Aufnahmeplatte 4 angeordnet und bemessen sind. Zwischen der Spannplatte 15 und der Aufnahmeplatte 4 können die verschließbaren Ventile 5 eingeklemmt sein, um eine Verschiebung oder gar ein Herauslösen von Ventilen 5 aus der Aufnahmeplatte 4 zu verhindern. Als verschließbare Ventile 5 können beispielsweise Entenschnabelventile zum Einsatz kommen.

Figur 7 zeigt eine schematische Detaildarstellung eines als Entenschnabelventil gestalteten, verschließbaren Ventils 5. Das Ventil 5 ist einstückig aus einem zumindest teilweise elastischen bzw. reversibel deformierbaren Kunststoffmaterial, wie einem Silikonkautschuk, gebildet. Das hier exemplarisch und schematisch dargestellte Entenschnabelventil hat eine linienförmige Schlitzöffnung 50. Andere Öffnungsformen sind denkbar. Das Ventil 5 ist dazu ausgestaltet, selbsttätig zu schließen. Das Entenschnabelventil hat einen kreisringförmigen Kragenabschnitt 51 zum Fixieren des Ventils 5. Die Schließkraft zum selbsttätigen Schließen der Schlitzöffnung 50 des Ventils 5 wird durch die materialimmanenten elastischen Rückstellkräfte des Entenschnabelventils bereitgestellt.

Die Schlitzöffnung 50 ist beidseitig durch Schnabelabschnitte 52 begrenzt. Die einander gegenüberliegenden Schnabelabschnitte 52 sind formgleich. Bei der abgebildeten Schnabelventil mit linienförmige Schlitzöffnung 50 liegen die Schnabelabschnitte einander spiegelsymmetrisch diametral gegenüber. Innenseitig an den Schnabelabschnitten 52 kann optional eine oder mehrere Verstärkungsrippen 54 vorgesehen sein, welche die Formstabilität der Schnabelabschnitte 52 verstärken. In Umfangsrichtung sind zwischen den Schnabelabschnitten 52 Zylinderabschnitte 53 vorgesehen. Die Schnabelabschnitte 52 sind an den Zylinderabschnitten 53 gehalten.

An der Innenseite des Schnabelventils ist ein Ventilkanal gebildet, der umfänglich von den Zylinderabschnitten 53 und den Schnabelabschnitten 52 umgeben ist. In dem in Figur 7 dargestellten entspannten Zustand des Ventils 5 ist der Ventilkanal im Wesentlichen keilförmig und läuft spitz auf die Schlitzöffnung 50 zu. In dem entspannten Zustand ist das Ventil 5 lose geschlossen. Wenn ein in dem Ventilkanal angeordnetes fließfähiges Medium mit einem Förderdruck beaufschlagt ist, drängt der Förderdruck gegen die Rückstellkraft der Schnabelabschnitte 52 und gegebenenfalls Verstärkungsrippen 54. Wenn der Förderdruck hinreichend groß ist, um die Rückstellkraft zu überwinden, wird das Ventil 5 geöffnet. Wenn hingegen an dem fließfähigen Medium in dem Ventilkanal ein Vakuum oder zumindest ein ausreichender Unterdruck anliegt, verstärkt dieser Unterdruck die Rückstellkraft und somit die Schließwirkung des Ventils 5.

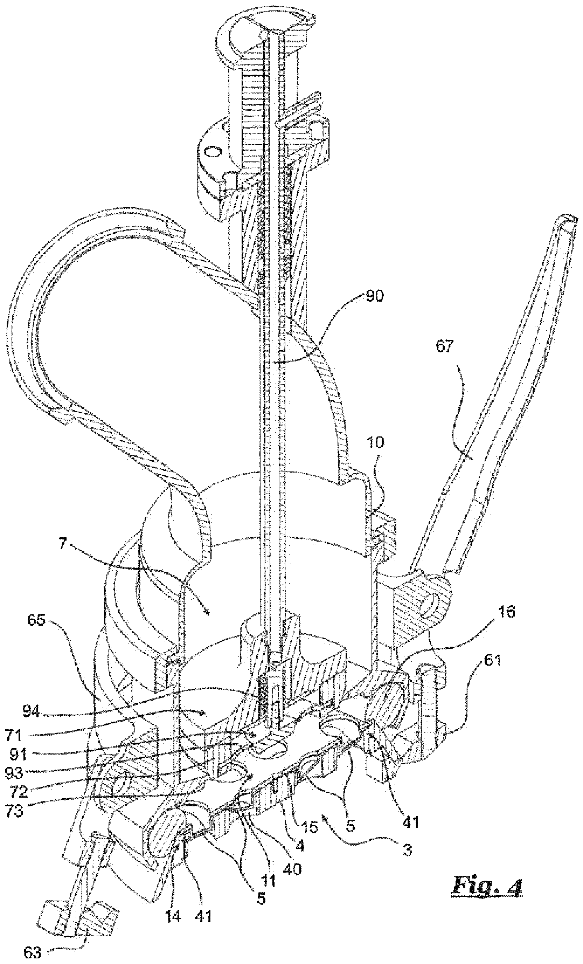

In den Schnittansichten der Figuren 3 und 4 ist auch das Dosierventil 7 der Abgabevorrichtung 1 dargestellt. Das Dosierventil 7 ist dem Abgabeausgang 3 und den dort angeordneten, verschließbaren Ventilen 5 vorgelagert angeordnet. Um von einer Quelle, wie einem Reservoir, einer Pumpe oder dergleichen zu dem Abgabeausgang 3 zu gelangen, muss das fließfähige Medium zunächst an dem Dosierventil 7 vorbeiströmen. Das Dosierventil 7 kann in eine geschlossene Stellung verbracht werden, um den Fluss des fließfähigen Mediums von der Quelle zu dem Abgabeausgang 3 zu unterbrechen. Wenn das Dosierventil 7 geöffnet ist, kann das fließfähige Medium von der Quelle zu dem Abgabeausgang 3 gelangen. Wenn an dem fließfähigen Medium in der Abgabevorrichtung 1 stetig ein vorzugweise konstanter Förderdruck anliegt, fließt das Medium kontinuierlich durch die Abgabevorrichtung 1 hindurch, solange das Dosierventil 7 geöffnet ist, und kann so an Behälter, wie Eimer, abgegeben werden. Bei einer solchen Vorrichtung kann eine insbesondere gravimetrische Steuerung der Abgabemenge durch den Förderdruck und die Öffnung des Dosierventils 7 erfolgen.

In der in Figur 3 abgebildeten geschlossenen Stellung des Dosierventil 7 befindet sich der Ventilkolben 71 mit dem Ventilsitz 73 in Kontakteingriff, sodass der Strom des fließfähigen Mediums unterbrochen ist. Um ein abdichtendes Schließen des Dosierventils 7 zu gewährleisten, kann ein Dichtkörper vorgesehen sein. Bei der vorliegenden Ausführung ist Dichtkörper durch eine Formdichtung 72 am Ventilkolben 71 realisiert, welcher mit dem Ventilsitz 73 in Eingriff gebracht wird. Der Ventilkolben 71 hat eine Stellstange, mit deren Hilfe er innerhalb des Abgaberohrs 10 translatorisch beweglich ist, um eine geöffnete Stellung oder eine mit dem Ventilsitz 73 in Kontakt stehenden Schließstellung einzunehmen.

Zwischen dem Dosierventil 7 und den am Abgabeausgang 3 angeordneten verschließbaren Ventilen 5 kann eine Schleusenkammer 11 oder Dosierkammer vorgesehen sein. Bei dem hier abgebildeten Beispiel, beispielsweise in Figur 3, ist die Schleusenkammer 11 begrenzt durch einerseits das Dosierventil 7, eine Membran 93, einen Teil des Abgaberohrs 10, welches hier auch den Ventilsitz 73 umfasst, dem Dichtmittel 16 und der Halteplatte 4 mit den darin sitzenden Ventilen 5.

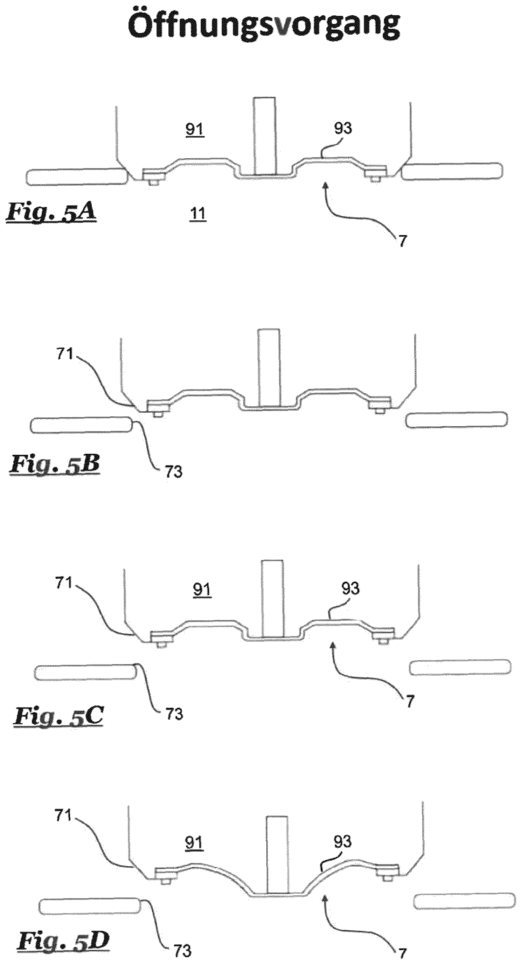

Die Funktion der Membran 93 wird nachfolgend anhand der Figuren 5A bis 6D im Detail erläutert. Grundsätzlich ist festzustellen, dass die Membran 93 bei der abgebildeten exemplarischen Ausführungsform Teil eines Druckreduktionsmittels 9 bildet, mit dem der Druck in der Schleusenkammer 11 eingestellt wird. Das Druckreduktionsmittel 9 ist dazu ausgelegt, die Schleusenkammer 11 mit einem Unterdruck zu beaufschlagen, um die Schließwirkung der verschließbaren Ventile 5 zu verstärken. Wenn die Schleusenkammer 11 sich in einem verschlossenen Zustand befindet, kann durch das Druckreduktionsmittel 9 der in der Schleusenkammer 11 vorherrschende Druck eingestellt werden.

Ohne Einwirkung des Druckreduktionsmittels 9 würde im Bereich der Abgabeöffnung 3 der Druck des fließfähigen Mediums bei geschlossenem Dosierventil 7 von dem Förderdruck auf den Umgebungsdruck absinken. Es hat sich gezeigt, dass das fließfähige Medium an Abgabeöffnungen konventioneller Abfüllvorrichtungen in erheblichem Maße zur Tropfenbildung neigt. Solche Tropfen können den soeben befüllten wie auch nachfolgende Behälter verschmutzen. Ebenso kann die Abfüllvorrichtungen und ihre Umgebung durch tropfendes Medium beschmutzt werden. Bei vielen Abfüllanlagen gestaltet sich die Reinigung befüllter Behälter wie auch der Abfüllanlage und ihrer Umgebung schwierig. Verunreinigungen durch Tropfen fließfähigen Mediums können unerwünschte kosmetische oder hygienische Folgen haben. Bei manchen Abfüllprozessen werden durch Tropfen verunreinigte Behälter als mangelhafte Ausschussware betrachtet.

Indem an der Abgabeöffnung 3 ein verschließbares Ventil oder mehrere verschließbare Ventile 5 angeordnet werden, kann eine Tropfbarriere realisiert werden. Eine weitere Reduktion der Tropfenbildung eine Abgabeöffnung 3 kann durch das Druckreduktionsmittels 9 bewirkt werden. Mithilfe des Druckreduktionsmittels 9 kann die Schließwirkung der verschließbaren Ventils 5 verstärkt werden. Zusätzlich kann mithilfe des Druckreduktionsmittels 9 eine Bewegung des fließfähigen Mediums weg von der Abgabeöffnung 3 zurück ins Innere des Abgaberohrs 10 bewirkt werden. Mithilfe des Druckreduktionsmittels 9 kann somit einer Tropfenbildung entgegengewirkt werden.

Bei der vorliegenden exemplarischen Ausführungen ist das Druckreduktionsmittel 9 mithilfe der Membran 93 realisiert, welche die Schleusenkammer 11 teilweise begrenzt. Das Druckreduktionsmittel 9 und das Dosierventil 7 sind hier als eine bauliche Einheit realisiert. Alternativ können sie getrennt und gegebenenfalls sogar entfernt voneinander angeordnet sein und Teil der Abgabevorrichtung 1 bilden (nicht näher dargestellt). Durch Betätigung des Druckreduktionsmittels 9 kann das effektive Volumen der Schleusenkammer 11 verstellt werden. Soweit das fließfähige Medium innerhalb der Schleusenkammer 11 inkompressibel oder zumindest näherungsweise inkompressibel ist, kann durch eine Veränderung des effektiven Volumens der Schleusenkammer 11 der Druck des fließfähigen Mediums eingestellt werden.

Das Druckreduktionsmittel 9 ist mit einem Steuerdruckkanal 90 ausgestattet, der in die Stellstange des Dosierventil 7 integriert ist. Die Stellstange ist als Rohr gebildet. Der Steuerdruckkanal 90 verbindet eine Hydraulik- oder Pneumatikkammer 91 mit wenigstens einem hydraulischen oder pneumatischen Stellaktor. Für eine präzise Einstellbarkeit des Druckreduktionsmittels 9 kann der Steuerdruckkanal 90 an eine Druckgrobdosierung 95 und eine Druckfeindosierung 96 angeschlossen sein. Die Hydraulik- oder Pneumatikkammer 91 ist durch die Membran 93 von der Schleusenkammer 11 getrennt. Auf die Membran 93 wirkt eine mechanische Rückstellfeder 94.

Zum Betätigen der Membran 93 mit einem Pneumatik- oder Hydraulikfluid wird die von der Schleusenkammer 11 durch die Membran 93 getrennte Pneumatik- oder Hydraulikkammer 91 mit einem Stelldruck beaufschlagt. Die Membran 93 kann derart betätigt werden, dass sie während des Schließens der Schleusenkammer 11 durch das Dosierventil 7 einen hochdruckbeaufschlagten, expandierten Zustand hat. Die Membran 93 kann in dem expandierten Zustand, vorzugsweise konvex, in die Schleusenkammer 11 hineinragen. Der expandierte Zustand der Membran 93 wird durch Anlegen des Steuerdrucks in der Hydraulik- oder Pneumatikkammer 91 bewirkt. Nach erfolgtem Verschließen der Schleusenkammer durch das Dosierventil 7 kann die Membran 93 aus dem expandierten Zustand in einen kontrahierten Zustand überführt werden. Die Membran 93 wird in dem niederdruck-beaufschlagten Zustand durch die Rückstellfeder 94 in den kontrahierten Zustand gebracht. In dem kontrahierten Zustand der Membran 93 bildet sie eine, insbesondere konkave, Ausbuchtung für die Schleusenkammer 11. Fig. 3 zeigt den kontrahierten Membranzustand.

Die Figuren 5A bis 5D zeigen eine bevorzugte Variante eines Öffnungsvorgangs des Dosierventils 7. Die schematische Darstellung gemäß Figur 5A entspricht dem in den Figuren 3 und 4 dargestellten Zustand. Die Membran 93 ist kontrahiert und die Schleusenkammer dadurch auf ihr vergrößertes Volumen zum Beaufschlagen des fließfähigen Mediums mit einem Unterdruck gebracht. Der Ventilkolben 71 wird sodann gemäß Figur 5B translatorisch von dem Ventilsitz 73 entfernt und zunächst in eine Zwischenstellung gebracht. Die Bewegung zwischen der Schließstellung und der Zwischenstellung des Dosierventil 7 kann mit einer ersten Öffnungsgeschwindigkeit erfolgen. Sobald der Ventilkolben 71 aus dem abdichtenden Kontakteingriff mit dem Ventilsitz 73 gelöst ist, kann unter Förderdruck stehendes fließfähiges Medium in die Schleusenkammer 11 eindringen und von dort in Richtung der Abgabeöffnung 3 fließen.

Ausgehend von der in Figur 5B dargestellten Zwischenstellung wird der Ventilkolben 71 weiter in eine vollständig geöffnete, relativ weit von dem Ventilsitz 73 entfernte Stellung gebracht. Die Bewegung aus der Schließstellung gemäß Figur 5A in die vollständig geöffnete Stellung gemäß Figur 5C kann kontinuierlich sein. Ab dem Erreichen der Zwischenstellung kann der Ventilkolben 71 in einer zweiten Öffnungsgeschwindigkeit weiter von dem Ventilsitz 73 entfernt werden. Nachdem überwindende Zwischenstellung, beispielsweise in der vollständig geöffneten Stellung des Dosierventil 7 wird die Hydraulik- oder Pneumatikkammer 91 mit einem hohen Steuerdruck beaufschlagt, welcher auf die Membran 93 wirkende Rückstellkräfte überwindet. Durch den hohen Steuerdruck wird die Membran 93 in ihren expandierten Zustand verbracht. Ab dem Erreichen der Zwischenstellung strömt das fließfähige Medium im Wesentlichen kontinuierlich durch die Spaltöffnung zwischen dem Ventilkolben 71 und dem Ventilsitz 73.

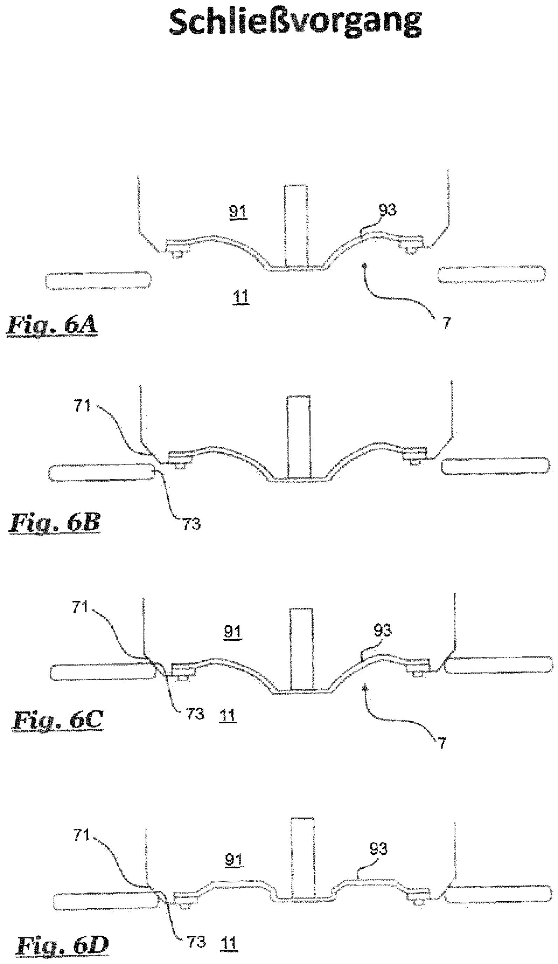

Die Figuren 6 A bis 6D zeigen eine bevorzugte Variante des Schließvorgangs des Dosierventils 7. Der in Figur 6A dargestellte Zustand entspricht dem Zustand gemäß Figur 5D und der in Figur 6D dargestellte Zustand entspricht dem Zustand gemäß Figur 5A.

Aus der in Figur 6A abgebildeten vollständig geöffneten Stellung des Dosierventils 7 wird der Ventilkolben 71 zu einer in Figur 6B dargestellten Zwischenstellung und dann weiter in die in Figur 6C abgebildete Schließstellung bewegen. Das Bewegen des Dosierventil 7 in die Schließstellung erfolgt vorzugsweise kontinuierlich. Während des Schließvorgangs kann der Ventilkolben 71 von seiner vollständig geöffneten Stellung in die Zwischenstellung mit einer ersten, niedrigen Geschwindigkeit bewegt werden, welche wesentlich kleiner ist als eine zweite, erhöhte Geschwindigkeit, mit der der Ventilkolben 71 aus der Zwischenstellung nahe der Schließstellung in die Schließstellung verbracht wird. Beispielsweise kann das Stellventil über ca. 1000 ms von der vollständig geöffneten Stellung zur Zwischenstellung und in ca. 5 ms von der Zwischenstellung zur Schließstellung verfahren werden. Während dem Bewegen von der vollständig geöffneten in die vollständig geschlossene Stellung wird die Membran 93 in dem expandierten Zustand gehalten. Beim Erreichen der Schließstellung gemäß Figur 6C befindet sich die Membran 93 in dem expandierten Zustand. Nach Erreichen der Schließstellung wird die Membran 93 von ihrem expandierten Zustand in ihren kontrahierten Zustand verbracht, der in Figur 6D angedeutet ist, und dadurch das effektive Volumen der Schleusenkammer 11 vergrößert und so der Druck des Mediums in der Schleusenkammer 11 gesenkt.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichen

- 1: Abgabevorrichtung
- 3: Abgabeausgang
- 4: Aufnahmeplatte
- 5: verschließbares Ventil
- 6: Befestigungsvorrichtung
- 7: Dosierventil
- 9: Druckreduktionsmittel
- 10: Abgaberohr
- 11: Schleusenkammer
- 14: Ventilaufnahmen
- 15: Spannplatte
- 16: Dichtmittel
- 40: Abgabekanal
- 41: Schulter
- 50: Schlitzöffnung
- 51: Kragenabschnitt
- 52: Schnabelabschnitt
- 53: Zylinderabschnitt
- 54: Verstärkungsrippe
- 61: Hakenvorsprung
- 63: Hakenvorsprung
- 65: Ausgleichswippe
- 67: Exzenterhebel
- 71: Ventilkolben
- 72: Formdichtung
- 73: Ventilsitz
- 90: Steuerdruckkanal
- 91: Hydraulik- oder Pneumatikkammer
- 93: Membran
- 94: Rückstellfeder
- 95: Druckgrobdosierung
- 96: Druckfeindosierung

## Patentansprüche

1. Vorrichtung (1) zum Abgeben eines fließfähigen Mediums, wie eine tropffähige wässrige Beschichtungsmasse, insbesondere Dispersionsbeschichtungsmasse, an einen Behälter, insbesondere einen Eimer, umfassend:
einen Abgabeausgang (3) für das fließfähige Medium, wenigstens ein am Abgabeausgang (3) angeordnetes, verschließbares Ventil (5); und wenigstens ein dem Abgabeausgang (3) vorgelagertes Dosierventil (7).

2. Vorrichtung nach Anspruch 1, wobei
das wenigstens eine verschließbare Ventil (5) als Rückschlagventil realisiert ist, insbesondere mit Federrückstellung,
wobei insbesondere das Rückschlagventil als Entenschnabelventil realisiert ist, bevorzugt als Entenschnabelventil, das genau eine, insbesondere diagonale, Schlitzöffnung (50) aufweist und/oder, bevorzugt und, das wenigstens einen Verstärkungssteg (54) aufweist, der sich vorzugsweise quer, insbesondere senkrecht zu der Schlitzöffnung (50) erstreckt.

3. Vorrichtung nach einem der vorstehenden Ansprüche, wobei
mehrere, insbesondere wenigstens zwei, vorzugsweise wenigstens fünf, besonders bevorzugt wenigstens zehn, und/oder, bevorzugt und, nicht mehr als 100, vorzugsweise nicht mehr als 50, besonders bevorzugt nicht mehr als 25, verschließbare Ventile (5), die am Abgabeausgang (3) angeordnet sind, wobei vorzugsweise die mehreren verschließbaren Ventile (5) baugleich sind.

4. Vorrichtung nach einem der vorstehenden Ansprüche, ferner umfassend
eine Aufnahmeplatte (4), wobei das wenigstens eine verschließbare Ventil (5) in der, insbesondere tellerförmigen, Aufnahmeplatte (4) gehalten ist.

5. Vorrichtung nach Anspruch 4, ferner umfassend
ein Abgaberohr (10) und eine Befestigungsvorrichtung (6), die zum lösbaren Befestigen der Aufnahmeplatte (4) am Abgaberohr (10) ausgelegt und eingerichtet ist,
wobei insbesondere die Befestigungsvorrichtung (6) wenigstens einen Exzenterhebel (67) zum Andrücken der Aufnahmeplatte (4) an das Abgaberohr (10) aufweist, und/oder, bevorzugt und,
wobei insbesondere die Befestigungsvorrichtung (6) wenigstens einen Hakenvorsprung (61, 63), vorzugsweise zwei diametral gegenüberliegende Hakenvorsprünge (61, 63), zum Ergreifen der Aufnahmeplatte (4) aufweist,
wobei vorzugsweise die Befestigungsvorrichtung (6) eine schwenkbar am Abgaberohr (10) gelagerte Ausgleichswippe (65) aufweist, die den wenigstens einen Hakenvorsprung (61, 63) trägt.

6. Vorrichtung nach einem der vorstehenden Ansprüche, wobei
das Dosierventil (7) einen beweglichen Ventilkolben (71) und einen Ventilsitz (73) umfasst, wobei insbesondere der Ventilkolben (71) einen Dichtkörper, wie eine Formdichtung (72), umfasst oder daraus besteht.

7. Vorrichtung nach einem der vorstehenden Ansprüche, wobei
das wenigstens eine verschließbare Ventil (5) und das Dosierventil (7) eine Schleusenkammer (11) begrenzen, sowie ferner umfassend wenigstens ein Druckreduktionsmittel (9), das zum Verringern des Drucks in der Schleusenkammer (11) ausgelegt und eingerichtet ist,
wobei das Druckreduktionsmittel (9) insbesondere eine die Schleusenkammer (11) abschnittsweise begrenzende, insbesondere ring- oder scheibenförmige, vorzugsweise federvorgespannte, Membran (93) aufweist.

8. Vorrichtung nach Anspruch 7, ferner umfassend
wenigstens einen Pneumatik- oder Hydraulikaktor, der insbesondere über eine Druckgrobdosierung (95) und/oder, bevorzugt und, eine Druckfeindosierung (96) in fluidischer Verbindung mit einer Pneumatik- oder Hydraulikkammer (91) steht, um die Pneumatik- oder Hydraulikkammer (91) mit einem Steuerdruck zu beaufschlagen, wobei die Membran (93) die Schleusenkammer (11) von der Pneumatik- oder Hydraulikkammer (91) separiert.

9. Vorrichtung nach einem der Ansprüche 7 oder 8, wobei
das Druckreduktionsmittel (9) in dem Dosierventil (7) angeordnet ist.

10. Verfahren zum Befüllen eines Gefäßes, insbesondere eines Eimers, mit einem fließfähigen Medium, wie einer tropffähigen wässrigen Beschichtungsmasse, insbesondere Dispersionsbeschichtungsmasse,
wobei das Medium diskontinuierlich durch wenigstens ein an einem Abgabeausgang (3) angeordnetes, verschließbares Ventil (5) an das Gefäß abgegeben wird und
wobei zum, vorzugsweise gravimetrischen, Dosieren der Abgabemenge ein dem Abgabeausgang (3) vorgelagertes Dosierventil (7) betätigt wird.

11. Verfahren nach Anspruch 10, wobei
das wenigstens eine verschließbare Ventil (5) sich selbsttätig schließt und/oder, vorzugsweise ausschließlich, durch eine Federrückstellkraft in seinen verschlossenen Zustand gedrängt wird.

12. Verfahren nach einem der Ansprüche 10 oder 11, wobei
das Abgeben des Mediums simultan durch mehrere am Abgabeausgang (3) angeordnete verschließbare Ventile (5) erfolgt.

13. Verfahren nach einem der Ansprüche 10 bis 12, wobei
das wenigstens eine verschließbare Ventil (5) von einer Aufnahmeplatte (4) getragen wird,
wobei insbesondere die Aufnahmeplatte (4), insbesondere mittels eines Exzenterhebels (67) und/oder, bevorzugt und, wobei mit einer schwenkbar gelagerten Ausgleichswippe (65), an einem Abgaberohr (10) befestigt wird und/oder, bevorzugt und,
wobei die Aufnahmeplatte (4) nach mehreren, insbesondere wenigstens 10, vorzugsweise wenigstens 1000, besonders bevorzugt wenigstens 1000, Abgabevorgängen gelöst, insbesondere entfernt, wird und wobei das wenigstens eine verschließbare Ventil (5) von der gelösten Aufnahmeplatte (4) entnommen und erneuert, insbesondere ausgetauscht und/oder gereinigt, wird.

14. Verfahren nach einem der Ansprüche 10 bis 13, wobei
eine Schleusenkammer (11) von dem wenigstens einen verschließbaren Ventil (5) und dem Dosierventil (7) begrenzt wird,
wobei insbesondere die Schleusenkammer (11) zum Beenden eines Abgabevorgangs vom Dosierventil (7) verschlossen wird,
wobei vorzugsweise das Dosierventil (7) zum Verschließen der Schleusenkammer (11) von einer Öffnungsstellung in eine Schließstellung bewegt wird, in der das Dosierventil (7) in Eingriff mit einem Ventilsitz gelangt, wobei das Dosierventil (7) von der Öffnungsstellung zunächst, insbesondere mit einer, vorzugsweise niedrigen, ersten Geschwindigkeit, in eine geöffnete Zwischenstellung und anschließend mit einer, vorzugsweise höheren, zweiten Geschwindigkeit in die Schließstellung bewegt wird.

15. Verfahren nach einem der Anspruch 14, wobei
zum Beenden eines Abgabevorgangs der Druck in der Schleusenkammer (11) reduziert wird,
wobei insbesondere zum Reduzieren des Drucks in der Schleusenkammer (11) eine die Schleusenkammer (11) abschnittsweise begrenzende Membran (93) betätigt wird,
wobei vorzugsweise die Membran (93) mit einer Rückstell-Federkraft beaufschlagt wird,
wobei besonders bevorzugt die Membran (93) mit einem Pneumatik- oder Hydraulikfluid beaufschlagt wird.

16. Verfahren nach einem der Ansprüche 10 bis 15, wobei
das Medium, insbesondere kontinuierlich, mit einem, vorzugweise konstanten, Versorgungsdruck an die Schleusenkammer (11) bereitgestellt wird.

17. Verwendung der Vorrichtung nach einem der Ansprüche 1 bis 9 oder des Verfahrens nach einem der Ansprüche 10 bis 16 für das präzise Dosieren und/oder, insbesondere und, das saubere, insbesondere nachtropffreie, Befüllen von Behältern, insbesondere Eimern, mit einem fließfähigen Medium, vorzugsweise einer tropffähigen wässrigen Beschichtungsmasse, insbesondere einer Dispersionsbeschichtungsmasse.
